# EUROPEAN PATENT APPLICATION

(11) **EP 3 495 089 A1**
(43) Date of publication of application: **12.06.2019**
(21) Application number: 17836903.9
(22) Date of filing: 31.07.2017
(51) Int. Cl.: B23K 35/363, B23K 20/00, B23K 20/16, B23K 35/24, B23K 35/26, B23K 35/28, H01B 5/00, C22C 12/00, C22C 13/00

(54) **COMPOSITION CONTAINING METAL PARTICLES**

(30) Priority: 03.08.2016 JP 2016152793
(71) Applicant: Furukawa Electric Co., Ltd., Chiyoda-ku Tokyo 100-8322 (JP)
(72) Inventor: ISHII Tomohiro, Tokyo 100-8322 (JP); FUJIWARA Hidemichi, Tokyo 100-8322 (JP)
(74) Representative: Zacco GmbH
(86) International application number: PCT/JP2017/027675
(87) International publication number: WO 2018/025798

(57) **Abstract**

Provided is a metal particle-containing composition capable of joining metals of electronic components and the like with high strength at a relatively low temperature. The metal particle-containing composition is characterized by comprising: metal fine particles (P1) including one or more metal elements (M), wherein the metal fine particles (P1) have a particle diameter in terms of a primary particle diameter of from 1 nm to 500 nm, and a melting point as a bulk of higher than 420°C; low-melting-point metal powder (P2) which includes a metal or alloy whose melting point is 420°C or lower, and unavoidably contains oxygen; and an activating agent (A) containing in the molecular structure one or more phosphorus or sulfur atoms, wherein the activating agent (A) can be bonded to oxygen atoms without generating water.

## Description

### Technical Field

The present invention relates to a metal particle-containing composition of metal fine particles usable for joining metals of electronic components and the like, and specifically to a metal particle-containing composition such as a metal fine particle dispersion liquid or metal fine particle dispersion powder, which is capable of joining metals of electronic components and the like by heating and which contains a plurality of kinds of metal particles.

### Background Art

Heretofore, soldering and brazing have been known as means for physically or electrically joining electronic components. Soldering and brazing are methods in which a filler material (solder) having a melting point lower than that of a base material to be joined is melted, and used as a type of adhesive to join a plurality of components without melting the base material itself. It is considered that not only atoms having an affinity in solder easily approach atoms on a surface of a base material to be joined, but also a diffusion phenomenon occurs in which elements in molten solder enter the base material.

For joining by soldering, a Sn-Pb eutectic alloy has been widely used as solder. A Sn-Pb eutectic alloy has a low melting temperature, and is excellent in diffusion property under high temperature conditions during joining, but when a Sn-Pb solder material is melted, evaporation or scattering of lead or lead oxide unavoidably occurs, and therefore development of a solder material free from lead has been advanced. In addition, in soldering, flux is blended in solder for the purpose of removing an oxide film on a base material, promoting a solder wetting phenomenon, and so on, but there is the problem that a process for washing the flux component is required after soldering operation.

In addition, for brazing, copper solder, gold solder, palladium solder and silver solder are known, which require high brazing temperatures of about 1090°C, 1040°C, 900°C and 750°C, respectively. In addition, a phosphorus copper-based brazing paste or the like is used for joining copper pipes, but even in this case, heating at a high temperature of about 600°C or higher is required, and therefore the skill of an operator is needed, so that it is difficult to automate a process. The solder is used in the form of a wire, a band, particles, powder or the like.

As a conventional technique, in Patent Literature 1, a joining method in which two metal bodies are joined to each other with a fusion layer of metal ultrafine particles interposed therebetween is disclosed. Specifically, in the joining method, a layer including metal ultrafine particles covered with an organic substance whose particle diameter is 1 to 100 nm is disposed between the joining surfaces of two metal bodies, treatment such as heating to a temperature of 150 to 500°C is performed to form a fusion layer of metal ultrafine particles, and the two metal bodies are joined to each other with the fusion layer interposed therebetween.

In Patent Literature 2, a method for brazing and joining bulk metals using a solder material free from lead is disclosed. Specifically, in the joining method, gaps between opposed surfaces of bulk metals to be joined are coated and filled with a metal colloid dispersion liquid in which metal ultrafine particles covered with an amine compound at the surfaces and having an average particle diameter of 1 to 100 nm are uniformly dispersed in an organic solvent, and heating is performed, so that interdiffusion and welding at contact interfaces between the bulk metal surface and the ultrafine particles, and welding of the ultrafine particles occur to form a joining layer.

In Patent Literature 3, an ink-like solder composition containing tin nanoparticles and silver nanoparticles with an average particle diameter in a nano-order and a flux component, with the tin nanoparticles and silver nanoparticles uniformly dispersed in a nonpolar solvent having a high boiling point is disclosed as an ink-like solder composition equivalent to Sn-Ag-based alloy solder. Specifically, in the solder composition, a mixing ratio of tin nanoparticles to silver nanoparticles is selected in a range of 95 : 5 to 99.5 : 0.5, a ratio of an average particle diameter d1 of tin nanoparticles to an average particle diameter d2 of silver nanoparticles (d1: d2) is selected in a range of 4: 1 to 10 : 1, an amount of the flux component added per 10 parts by mass of tin nanoparticles is selected in a range of 0.5 parts by mass to 2 parts by mass, and a hydrocarbon-based solvent having a boiling point in a range of 200°C to 320°C is selected.

In Patent Literature 4, a low-melting-point brazing material formed by mixing powder of one or more metals selected from Au, Ag, Cu, Ni, Pt and Pd as a noble metal having favorable processability and powder of one or more metals selected from Sn, Pb, Cd, In and Zn as a metal having a low melting point and favorable processability, and compressing and solidifying the resulting mixture to a desired shape is disclosed for the purpose of providing a low-melting-point brazing material having sufficient brazing strength.

In Patent Literature 5, a joining material having, as a main agent for joining, composite type metal nanoparticles in which the periphery of a nucleus including metal particles having an average particle diameter of about 100 nm or less is bonded and covered with an organic substance containing C, H and/or O as main components, as an alternative to high-temperature solder in which lead is not used is disclosed.

In Patent Literature 6, a semiconductor device having the following configuration is disclosed, for providing a joining material which is free from a lead component and which has high joining strength and fracture toughness, and a semiconductor device having the joining material as a joining layer. That is, the joining layer is a composite metal sintered body in which a metal X having a hardness higher than that of Ag forms dispersion phases in an Ag matrix including crystal particles of 10 to 1000 nm, and the composite metal sintered body has a metal junction formed at an interface between the Ag matrix and the metal X dispersion phase, has a metal junction formed at an interface between the outermost surface of the electronic member and the Ag matrix, and has a metal junction formed at an interface between the outermost surface of the electronic member and the metal X dispersion phase, each of the metal X dispersion phases is a monocrystalline body or a poly crystalline body, and the metal X dispersion phase of the polycrystalline body has a metal junction formed at internal grain boundaries of the metal X dispersion phase without interposing an oxide film layer.

In Patent Literature 7, a silver solder paste which includes fine powder of silver solder containing at least silver and copper, an antioxidant, and a solvent as a solder paste which can be prevented from being oxidized is disclosed.

In Patent Literature 8, use of phosphorous acid, phosphoric acid, a phosphorous acid ester or a phosphoric acid ester as a surface oxide film removing agent for flux for soldering for efficiently removing oxide films on surfaces of metals of printed circuit boards and electronic components to be soldered is disclosed.

In Patent Literature 9, use of anhydrides, carboxylic acids, amides, imides, amines, alcohols, phenols, aldehydes, ketones, nitro compounds, nitriles, carbamates, isocyanates, amino acids, peptides, thiols, sulfonamides, semicarbazones, oximes, hydrazones, cyanohydrins, urea, phosphoric acid, phosphoric acid esters, thiophosphoric acid, thiophosphoric acid esters, phosphonic acid, phosphoric acid esters, phosphorous acid esters, phosphonamide, sulfonic acid and sulfonic acid esters as crosslinkers for a solder composition for ensuring that solder powder is reactive only at the time when the solder powder is melted or at a time close to the time when the solder powder is melted is disclosed.

### Document List

### Patent Literatures

Patent Literature 1: Japanese Patent Application Laid-Open No. 2001-225180
Patent Literature 2: Japanese Patent Application Laid-Open No. 2002-126869
Patent Literature 3: Japanese Patent Application Laid-Open No. 2009-6337
Patent Literature 4: Japanese Patent Application Laid-Open No. 08-057681
Patent Literature 5: Japanese Patent Application Laid-Open No. 2004-107728
Patent Literature 6: Japanese Patent Application Laid-Open No. 2010-50189
Patent Literature 7: Japanese Patent Application Laid-Open No. 08-164494
Patent Literature 8: Japanese Patent Application Laid-Open No. 07-88687
Patent Literature 9: Japanese Patent No. 2972338

### Summary of Invention

### Technical Problem

By using a metal particle-containing composition for joining, which contains metal fine particles having a particle diameter in a nano order and a relatively high melting point, and low-melting-point metal powder having a relatively low melting point, metals of electronic components and the like can be joined with metal fine particles melted into low-melting-point metal powder at a relatively low temperature. Further, when the metal particle-containing composition for joining contains an activating agent for removing oxygen atoms contained in the low-melting-point metal powder by heating during joining, an activation effect of the activating agent is enhanced by catalytic action of the metal fine particles in joining, so that oxygen atoms contained in the low-melting-point metal powder are quickly removed.

However, when a carboxylic acid-based compound heretofore used for a solder paste, a polyol-based compound heretofore used as an additive for metal fine particles, or the like is used as an activating agent, the problem arises that in a process of removing oxygen atoms from low-melting-point metal powder, hydrogen atoms contained in the molecular structure of the activating agent are combined with the oxygen atoms, resulting in generation of water with a large amount of latent heat of vaporization.

In addition, the inventions disclosed in Patent Literature 1, Patent Literature 2 and Patent Literature 5 as described above have the problem that since metal fine particles are sintered in a solid phase due to the property of melting point depression of metal ultrafine particles, voids are generated between sintered metal fine particles, so that it is difficult to obtain a dense joined body.

In addition, the invention disclosed in Patent Literature 3 has the problem that since tin particles having a particle diameter in a nanometer order of 100 nm or less and a hydrocarbon-based nonpolar solvent or the like having a high boiling point are used in combination, there is restriction in practical use such that members to be joined cannot be joined unless heating is performed for a longer period of time as compared to a case where conventional Sn-Ag-based solder is used, and heat resistance of the members to be joined cannot be sufficiently secured.

In addition, in the invention disclosed in Patent Literature 4, it is required that metal powder be compressed at a high temperature to be solidified, and then formed in a shape by extrusion processing, rolling processing or the like, and therefore not only the process is complicated, but also use conditions such as shapes of materials to be joined are considerably limited.

In addition, in the invention disclosed in Patent Literature 6, not only the crystal particle size of the joining layer is restricted, but also the problem of migration of silver may arise depending on specifications of materials to be joined because silver is essential as a matrix phase.

In addition, the invention disclosed in Patent Literature 7 has the problem that in view of the composition of metals constituting the paste, and the particle diameter, joining at a low temperature cannot be expected, and performance may be markedly deteriorated by oxidation of copper.

In addition, in the inventions disclosed in Patent Literatures 8 and 9, merely use of phosphoric acid or the like with the aim of action of removing a surface oxide film and crosslinking action is disclosed.

The present invention solves the problems described above, and an object of the present invention is to provide a metal particle-containing composition which is capable of joining metals of electronic components and the like at a relatively low temperature, and enables joining with high strength.

### Solution to Problem

The inventors of the present invention have extensively conducted studies, and resultantly arrived at the following findings.

By using a metal particle-containing composition for joining, which contains metal fine particles having a particle diameter in a nano order and a relatively high melting point, low-melting-point metal powder having a relatively low melting point, and an activating agent for removing oxygen atoms contained in the low-melting-point metal powder by heating during joining, an activation effect of the activating agent is enhanced by catalytic action of the metal fine particles in joining, so that oxygen atoms contained in the low-melting-point metal powder are quickly removed. Further, after the low-melting-point metal powder is melted while maintaining favorable wettability, at least some or most of the metal fine particles are melted into the low-melting-point metal to form an alloy, and as a result, the melting point after joining is increased to obtain a joined body which is excellent in heat resistance and electrical conductivity, and has increased joining strength.

Specifically, by using metal fine particles (P1) including one or more metal elements (M), wherein the metal fine particles (P1) have a melting point of higher than 420°C in a bulk state in addition to low-melting-point metal powder (P2) which includes metal species having a relatively low melting point, such as tin, lead and zinc and which has a melting point of 420°C or lower, fine particles of the metal elements (M) as a main component of metal fine particles (P1) are melted into low-melting-point metal powder (P2) during joining by heating, so that an alloy or intermetallic compound having an increased melting point is formed from the metal elements (M) and low-melting-point metal powder (P2) to join materials of metal pipes, electronic components and the like. Further, a joining layer of the alloy or intermetallic compound formed from the metal elements (M) and low-melting-point metal powder (P2) has a melting point considerably higher than that of a joining layer formed from low-melting-point metal powder (P2) alone, and therefore has improved heat resistance, so that joining strength at a relatively high temperature is improved.

Regarding the melting of the metal elements (M) as a main component of metal fine particles (P1) into low-melting-point metal powder (P2), the diffusion property of metal atoms is enhanced to facilitate the melting as the particle diameter of metal fine particles decreases, but in a state in which low-melting-point metal powder (P2) is not activated and is not sufficiently melted, melting does not occur, and a sintering reaction of metal fine particles proceeds, resulting in phase separation from the low-melting-point metal, and therefore an activation treatment for sufficiently melting low-melting-point metal powder (P2) is required. Here, when a carboxylic acid-based compound heretofore used for a solder paste, a polyol-based compound heretofore used as an additive for metal fine particles, or the like is used as an activating agent, the problem arises that in a process of removing oxygen atoms from low-melting-point metal powder (P2), hydrogen atoms contained in the molecular structure of the activating agent are combined with oxygen atoms, resulting in generation of water with a large amount of latent heat of vaporization. In general, a product with a large amount of latent heat of vaporization, such as water induces formation of voids in the structure by causing heavy bumping by heated.

Thus, the inventor of the present invention has found that by using an activating agent (A) containing in the molecular structure one or more phosphorus or sulfur atoms which are bonded to oxygen atoms with an increase in valence, low-melting-point metal powder (P2) can be activated by removing oxygen atoms without generating water. That is, only a change occurs such that the valence of phosphorus or sulfur increases at the time when phosphorus or sulfur contained in the activating agent (A) is directly bonded to oxygen atoms, and an unnecessary byproduct such as water is not generated from the activating agent (A). The activating agent (A) after absorbing oxygen atoms also has an effect of being decomposed into a volatile organic substance having a low molecular weight by catalytic action of metal fine particles, so that it is possible to reduce the amount of organic substance residues while suppressing formation of voids, leading to completion of the present invention.

That is, the summary constitutions of the present invention are as follows.
(1) A metal particle-containing composition characterized by comprising: metal fine particles (P1) including one or more metal elements (M),wherein the metal fine particles (P1) have a particle diameter in terms of a primary particle diameter of from 1 nm to 500 nm, and a melting point as a bulk of higher than 420°C; low-melting-point metal powder (P2) which includes a metal or alloy whose melting point is 420°C or lower, and unavoidably contains oxygen; and an activating agent (A) containing in the molecular structure one or more phosphorus or sulfur atoms, wherein the activating agent (A) can be bonded to oxygen atoms without generating water.
(2) The metal particle-containing composition according to (1), characterized in that the metal elements (M) is at least one selected from copper, silver, gold and nickel.
(3) The metal particle-containing composition according to (1) or (2), characterized in that the particle diameter in terms of a primary particle diameter of the low-melting-point metal powder (P2) is from more than 500 nm to 50 µm.
(4) The metal particle-containing composition according to any one of (1) to (3), characterized in that the low-melting-point metal powder (P2) is tin metal powder, or tin alloy powder in which at least one selected from copper, silver, zinc, phosphorus, aluminum and bismuth forms a solid solution with tin.
(5) The metal particle-containing composition according to any one of (1) to (4), characterized in that the activating agent (A) is an organic phosphorus compound (A1) containing at least one carbon atom in the molecular structure.
(6) The metal particle-containing composition according to (5), characterized in that the organic phosphorus compound (A1) is at least one selected from phosphines and phosphites.
(7) The metal particle-containing composition according to any one of (1) to (4), characterized in that the activating agent (A) is an organic sulfur compound (A2) containing at least one carbon atom in the molecular structure.
(8) The metal particle-containing composition according to (7), characterized in that the organic sulfur compound (A2) is at least one selected from sulfides, disulfides, trisulfides and sulfoxides.
(9) The metal particle-containing composition according to any one of (1) to (8), characterized by further comprising metal powder (P3) including one or more metal elements (M), wherein the metal powder (P3) has a particle diameter in terms of a primary particle diameter of from more than 500 nm to 50 µm, and a melting point as a bulk of higher than 420°C.

### Effects of Invention

According to the present invention, it is possible to provide a metal particle-containing composition which is capable of joining metals of electronic components and the like at a relatively low temperature and which enables joining with high strength.

### Brief Description of Drawings

[FIG. 1] A diagram showing a relationship between an oxygen content and a particle diameter in terms of a calculated value on the assumption that the film thickness of an oxide film formed on tin powder as low-melting-point metal powder (P2) is constant.
[FIG. 2] A diagram showing a SEM image of a cross-section of copper plates joined using a sample prepared in Example 4.
[FIG. 3] A diagram showing a SEM image of a cross-section of copper plates joined using a sample prepared in Comparative Example 4.
[FIG. 4] A diagram showing a SEM image of a cross-section of copper plates joined using a sample prepared in Comparative Example 7.

### Description of Embodiments

Hereinafter, a metal particle-containing composition of the present invention, a method for producing the metal particle-containing composition, and so on will be described.

### [1] Metal particle-containing composition

The metal particle-containing composition of the present invention is characterized by comprising: metal fine particles (P1) including one or more metal elements (M), wherein the metal fine particles (P1) have a particle diameter in terms of a primary particle diameter of from 1 nm to 500 nm, and a melting point of higher than 420°C in a bulk state (here, the melting point in a bulk state is a melting point for which melting point depression does not markedly occur depending on a metal particle diameter, and the same applies hereinafter); low-melting-point metal powder (P2) which includes a metal or alloy having a melting point of 420°C or lower in a bulk state, and unavoidably contains oxygen; and an activating agent (A) containing in the molecular structure one or more phosphorus or sulfur atoms, wherein the activating agent (A) can be bonded to oxygen atoms without generating water. Further, the metal particle-containing composition may comprise metal powder (P3) including one or more metal elements (M), wherein the metal powder (P3) has a particle diameter in terms of a primary particle diameter of from more than 500 nm to 50 µm, and a melting point as a bulk of higher than 420°C.

### (1) Metal fine particles (P1)

The metal fine particles (P1) are metal fine particles including one or more metal elements (M), wherein the metal fine particles (P1) have a particle diameter in terms of a primary particle diameter of from 1 nm to 500 nm, and a melting point of higher than 420°C (melting point in a bulk state).

### (a) Metal element (M)

The metal element (M) can be used as long as its melting point (the melting point means a melting point in a bulk state, and hereinafter, the melting point means a melting point in a bulk state unless otherwise specified) is higher than 420°C, and it can form an alloy with low-melting-point alloy powder (P2).

The reason why the melting point of the metal element (M) is 420°C or higher is that while formation of an alloy with low-melting-point alloy powder (P2) at a temperature lower than 420°C is prevented, a joint formed by forming an alloy with low-melting-point alloy powder (P2) in joining is kept high to improve the heat resistance of the joint.

Here, for the metal element (M), since the particle diameter of primary particles is from 1 nm to 500 nm in the metal particle-containing composition, the melting point in a fine particle state tends to be a temperature lower than the melting point in a bulk state (higher than 420°C) as the particle diameter decreases, but as an indication, the melting point in a bulk state is employed as a base. In addition, in light of the melting point in joining, electrical conductivity after joining, and so on, the metal element (M) forming metal fine particles (P1) is preferably at least one selected from copper, silver, gold and nickel. In addition, besides the above-described metal elements, palladium, cobalt, chromium, cadmium, indium and the like which are capable of forming metal fine particles can be used.

### (b) Particle diameter of primary particles of metal fine particles (P1)

Granular nanosized metal fine particles with a high purity, which are not aggregated in a plated film form or a dendrite form, can be obtained through an electroless reduction reaction or electrolytic reduction reaction from ions etc. of the metal element (M) in a reduction reaction solution by relatively easy operation. In metal fine particles (P1), the particle diameter of primary particles is in a range of 1 nm or more and 500 nm or less. Here, the particle diameter of the primary particle means the diameter of primary particles of individual fine particles of a metal or the like which constitute a secondary particle. The primary particle diameter is a value measured using an electronic microscope, and encompasses not only a core part including fine particles of the metal element (M), but also a covering material present on the surface. That is, the phrase "metal fine particles (P1) have a "particle diameter in a range of 1 nm or more and 500 nm or less"" means a range that also encompasses a covering material present on the surface.

As described above, it is known that when the particle diameter of metal fine particles (P1) decreases to a nanometer size (1 nm or more and 500 nm or less), the number of constituent atoms per particle decreases, and the surface area with respect to the volume of particles sharply increases, so that the melting point and the sintering temperature become lower as compared to the metal in a bulk state. This tendency is noticeable when the particle diameter of metal fine particles (P1) is 100 nm or less, and in particular, when the particle diameter of metal fine particles (P1) is about 10 to 20 nm, the surfaces of metal fine particles (P1) are melted even at a temperature considerably lower than the melting point of the metal in a bulk state, so that the particles are sintered together.

### (c) Melting point of metal fine particles (P1)

The metal element (M) constituting metal fine particles (P1) has a melting point of higher than 420°C in a bulk state. By using metal fine particles (P1) having a melting point of higher than 420°C in a bulk state, the melting point of a joint can be kept relatively high after an alloy is formed with low-melting-point metal powder (P2) in a molten state in formation of the joint by heating, and cooled, and thus it is possible to improve heat resistance.

The melting point increasing effect can be obtained as long as the melting point of the metal element (M) in a bulk state is a temperature higher than the melting point of low-melting-point metal powder (P2) in a bulk state.

### (d) Mixture of metal fine particles (P1)

Metal fine particles (P1) may include a mixture of the metal element (M) and an oxygen-containing compound such as an oxide or a hydroxide. The oxygen-containing compound is, for example, cuprous oxide, cupric oxide, copper hydroxide, nickel oxide, nickel hydroxide or the like. In addition, the oxide or hydroxide of the metal element (M) is decomposed and removed by the activating agent (A) during heating. That is, even when metal fine particles (P1) are a mixture containing an oxygen-containing compound etc., the activating agent (A) takes oxygen away from the oxygen-containing compound etc. in the metal element (M).

### (e) Surface covering material on metal fine particles (P1)

The surfaces of metal fine particles (P1) may be covered with an organic compound. The organic compound is known to form a molecular layer as atom parts having unshared electron pairs in functional groups are absorbed to the surfaces of fine particles including the metal element (M). That is, the organic compound covering the surfaces of metal fine particles (P1) is expected to exhibit an effect of moderately hindering sintering of fine particles, and an effect of enhancing the dispersibility of metal fine particles. Specifically, the organic compound exhibiting such effects may be, for example, one or more selected from polyvinylpyrrolidone, polyacrylamide, polyvinyl alcohol, 2-pyrrolidone and alkyl-2-pyrrolidone, but the organic compound is not limited to the examples described above as long as the organic compound is one exhibiting the above-described effects. In addition, for exhibiting the above-described effects in joining, the boiling point or decomposition point of the organic compound is preferably equal to or higher than the melting point of low-melting-point metal powder (P2) in a bulk state.

In addition, the method for covering the surfaces of fine particles including the metal element (M) with an organic compound is not particularly limited, but is preferably a method in which the surfaces of the fine particles in a solution containing an organic compound are covered.

Specific examples of the covering method include a method in which an organic compound is blended as an additive in a reduction reaction aqueous solution at the time when ions etc. of the metal element (M) are subjected to a reduction reaction by electroless reduction or electrolytic reduction in the reduction reaction aqueous solution to produce fine particles including the metal element (M). The organic compound here exhibits an effect of promoting generation of fine particle crystal nuclei of the metal element (M) in a granular form by reduction of the metal element, and suppressing growth of granular crystal particles in a plated film form or a dendrite form by covering deposited fine particles of the metal element (M) to improve dispersibility. When some of metal fine particles are covered with the organic compound, the effect of dispersibility and the effect of suppressing growth of granular crystal particles in a plated film form or a dendrite form are markedly exhibited.

In addition, by adding metal fine particles generated through a reduction reaction to a solvent containing an organic compound to additionally cover the metal fine particles with the organic compound, the covering effect of the organic compound can be improved. Such an additional covering treatment with an organic compound can be obtained by, for example, adding metal fine particles in a solution of the organic compound with water, alcohol or toluene as a solvent, and stirring the resulting mixture.

### (2) Low-melting-point metal powder (P2)

Low-melting-point metal powder (P2) is metal powder which is dispersedly present in the metal particle-containing composition, and includes a metal or alloy having a melting point of 420°C or lower in a bulk state, and low-melting-point metal powder (P2) unavoidably contains oxygen. Specifically, low-melting-point metal powder (P2) contains oxygen atoms on the surface or inside of the powder under the influence of a production process, air oxidation or the like. In addition, low-melting-point metal powder (P2) forms a joined body by forming an alloy with the whole or a part of the metal element (M) in a molten state in the state where the metal element (M) becomes dispersible from the surfaces of metal fine particles (P1) in a joining by heating.

Low-melting-point metal powder (P2) includes a metal or alloy having a melting point of 420°C or lower in a bulk state for melting the metal powder at a relatively low temperature in joining by heating, and specifically, it is preferable that low-melting-point metal powder (P2) be tin metal powder which is capable of forming an alloy with the metal element (M), and enables joining of materials at a low temperature, or tin alloy powder in which at least one selected from copper, silver, zinc, phosphorus, aluminum and bismuth forms a solid solution with tin. In addition, it is preferable that the particle diameter of primary particles of low-melting-point metal powder (P2) be from more than 500 nm to 50 µm for quickly forming a molten state in joining by heating.

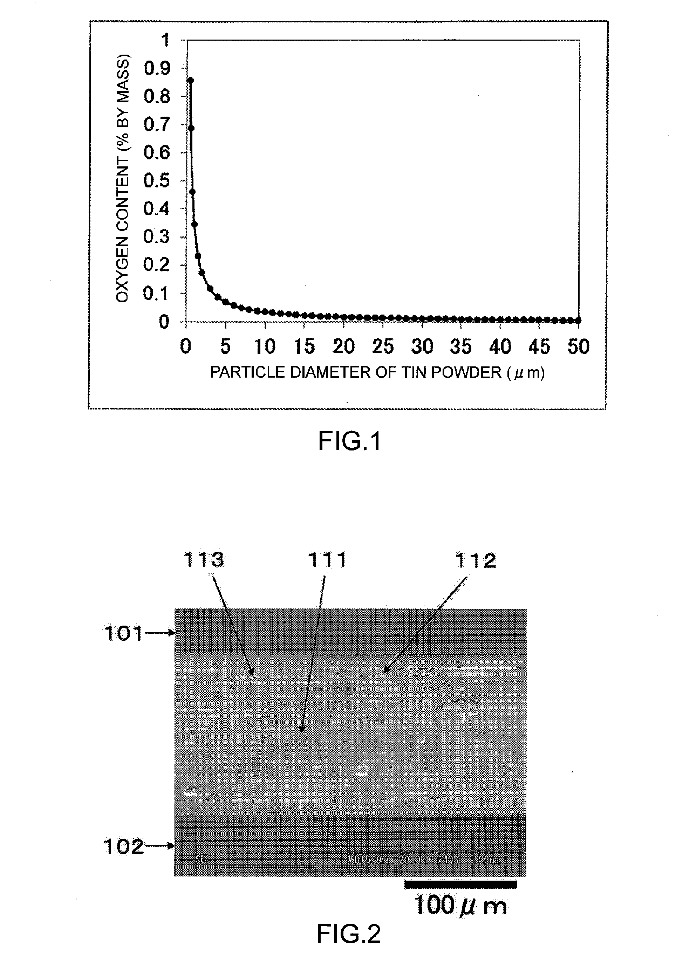

The content of oxygen unavoidably contained in low-melting-point metal powder (P2) will be described with reference to FIG. 1. FIG. 1 is a diagram showing a relationship between an oxygen content and a particle diameter in terms of a calculated value on the assumption that the film thickness of an oxide film formed on tin powder as low-melting-point metal powder (P2) is constant. More specifically, in FIG. 1, a relationship between an oxygen content and a particle diameter is shown on the assumption that the oxidation level of tin powder having a particle diameter of 10 µm is 0.035% by mass and on the condition that the film thickness of stannous oxide is 5.6 nm. For example, if the particle diameter of low-melting-point metal powder (P2) is from more than 500 nm to 50 µm, about 0.005 to 1% by mass of oxygen is unavoidably contained as is evident from FIG. 1.

### (3) Metal powder (P3)

Metal powder (P3) includes the metal element (M) having a particle diameter of from more than 500 nm to 50 µm in terms of a primary particle diameter and a melting point of higher than 420°C, and metal powder (P3) may be contained in a component constituting the metal particle-containing composition. It is preferable that the metal element be at least one selected from copper, silver, gold and nickel.

### (4) Activating agent (A)

The activating agent (A) exhibits an action of removing oxygen atoms from low-melting-point metal powder (P2) at a temperature in the vicinity of the melting point of low-melting-point metal powder (P2) in joining to a body to be joined by the metal particle-containing composition. In addition, when oxygen atoms are contained in metal fine particles (P1), an action of removing oxygen atoms from metal fine particles (P1) is also exhibited.

As the activating agent (A), a compound containing in the molecular structure one or more phosphorus or sulfur atoms which can be bonded to oxygen atoms without generating water, and exhibit an action of removing oxygen atoms can be used. In particular, it is preferable that the activating agent (A) be an organic phosphorus compound (A1) or organic sulfur compound (A2) containing at least one carbon atom in the molecular structure.

An action will now be described in which the organic phosphorus compound (A1) and organic sulfur compound (A2) are bonded to oxygen atoms without generating water, so that the oxygen atoms are removed.

The following formula (1) is a reaction formula in which oxygen atoms are removed using an alcohol-based activating agent. The following chemical formula (2) is a reaction formula in which oxygen atoms are removed using a carboxyl-based activating agent. The following chemical formula (3) is a reaction formula in which oxygen atoms are removed using an activating agent of organic phosphorus compound (A1). The following chemical formula (4) is a reaction formula in which oxygen atoms are removed using an activating agent of organic sulfur compound (A2). It is to be noted that in the following chemical formulae (1) to (4), Rs each independently represent an organic group, and Rs may be the same or different. Me represents a metal element.

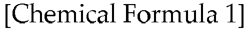

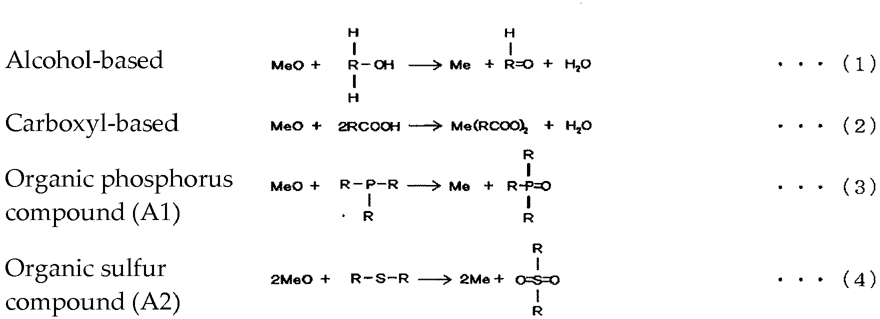

As is evident from the chemical formulae (1) and (2), oxygen atoms are removed from a metal oxide while water is generated when an alcohol-based activating agent and a carboxyl-based activating agent are used. On the other hand, as is evident from the chemical formulae (3) and (4), oxygen atoms can be removed from a metal oxide without generating water when an activating agent of organic phosphorus compound (A1) and an activating agent of organic sulfur compound (A2) are used.

In addition, it is preferable that the organic phosphorus compound (A1) be at least one selected from phosphines and phosphites. As the phosphines, for example, triphenylphosphine, tris(4-methylphenyl)phosphine, methyldiphenylphosphine, diethylphenylphosphine, cyclohexyldiphenylphosphine, 4-(diphenylphosphino)styrene, methylene-bis(diphenylphosphine), ethylene-bis(diphenylphosphine), trimethylene-bis(diphenylphosphine) and tetramethylene-bis(diphenylphosphine) can be used. In addition, as the phosphites, for example, trimethyl phosphite, triethyl phosphite, triisopropyl phosphite, tributyl phosphite, trioctyl phosphite, tris(2-ethylhexyl) phosphite, triisodecyl phosphite, trioleyl phosphite, triphenyl phosphite, tri-p-tolyl phosphite, tris(2,4-di-tert-butylphenyl) phosphite, tristearyl phosphite, tris(nonylphenyl) phosphite and trilauryl trithiophosphite can be used.

In addition, it is preferable that the organic sulfur compound (A2) be at least one selected from sulfides, disulfides, trisulfides and sulfoxides. As the sulfides, for example, bis(4-methacryloylthiophenyl) sulfide, bis(4-hydroxyphenyl) sulfide, bis(4-aminophenyl) sulfide, 2-methylthiophenothiazine, diallyl sulfide, ethyl 2-hydroxyethyl sulfide, diamyl sulfide, hexyl sulfide, dihexyl sulfide, n-octyl sulfide, phenyl sulfide, 4-(phenylthio)toluene, phenyl p-tolyl sulfide, 4-tert-butyldiphenyl sulfide, di-tert-butyl sulfide, diphenylene sulfide, furfuryl sulfide and bis(2-mercaptoethyl) sulfide can be used. In addition, as the disulfides, for example, diethyl disulfide, dipropyl disulfide, dibutyl disulfide, amyl disulfide, heptyl disulfide, cyclohexyl disulfide, bis(4-hydroxyphenyl) disulfide, bis(3-hydroxyphenyl) disulfide, diphenyl disulfide and benzyl disulfide can be used. As the trisulfides, for example, dimethyl trisulfide and diisopropyl trisulfide can be used. As the sulfoxides, dimethyl sulfoxide, dibutyl sulfoxide, di-n-octyl sulfoxide, methylphenyl sulfoxide, diphenyl sulfoxide, dibenzyl sulfoxide and p-tolyl sulfoxide can be used.

In addition, for obtaining a dense joined state with little voids, it is preferable that the activating agent (A) is not exhausted in the metal particle-containing composition before the low-melting-point metal turns into a molten state. Thus, by ensuring that the boiling point or decomposition point (T_{A}) of the activating agent (A) is equal to or higher than the melting point (Tp₂) of low-melting-point metal powder (P2) (T_{A} ≥ Tp₂), a joined state with improved heat resistance and high strength can be obtained even in the case of heating at a low temperature as in conventional soldering. Specifically, it is preferable to combine a plurality of kinds of activating agents (A) having different boiling points depending on a molecular weight, so that at least one kind of activating agent (A) satisfies the relationship of T_{A} ≥ Tp₂.

### (5) Metal particle-containing composition

### (a) Components and composition of metal particle-containing composition

Components constituting the metal particle-containing composition include at least metal fine particles (P1), low-melting-point metal powder (P2) and the activating agent (A) as described above. The metal particle-containing composition may contain a solvent for adjusting the viscosity, and may contain metal powder (P3) including the metal element (M), wherein the metal powder (P3) has a particle diameter in terms of a primary particle diameter of from more than 500 nm to 50 µm, and a melting point of higher than 420°C.

In the metal particle-containing composition, it is preferable that the content of metal fine particles (P1) be 0.5 to 80% by mass, and more preferable that it be 1 to 30% by mass. When the ratio of metal fine particles (P1) is less than 0.5% by mass, the effect of increasing the melting point of a joining layer may be deteriorated, thus making it impossible to expect improvement of heat resistance. On the other hand, when the ratio of metal fine particles (P1) is more than 80% by mass, metal fine particles (P1) may be aggregated, leading to insufficient formation of an alloy layer with low-melting-point metal powder (P2).

In the metal particle-containing composition, it is preferable that the ratio (% by mass) of the total metal content (P1 + P2) of metal fine particles (P1) and low-melting-point metal powder (P2) be 5 to 95% by mass, and more preferable that it be 30 to 90% by mass. When the metal content is less than 5% by mass, the film thickness of a joining layer may be uneven, leading to generation of cracks and voids. On the other hand, when the metal content is more than 95% by mass, the reduction action of the activating agent (A) may be deteriorated, resulting in a joined state with insufficient strength. It is preferable that a value appropriate for alloy/metal species to be formed be used as the ratio of metal fine particles (P1) to low-melting-point metal powder (P2).

It is preferable that the content ratio of the activating agent (A) in the metal particle-containing composition be 0.03 to 1, and more preferable that it be 0.1 to 0.3 in terms of a mass ratio to the metal content (P1 + P2) (A/(P1 + P2)). When the mass ratio is less than 0.03, it may be impossible to sufficiently exhibit the reduction action of the activating agent (A). On the other hand, when the mass ratio is more than 1, the unreacted activating agent (A) may remain in a large amount, resulting in an uneven joined state.

### (b) Method for producing metal particle-containing composition

As a method for producing a metal particle-containing composition, metal fine particles (P1), low-melting-point metal powder (P2) and the activating agent (A) are added, and it is preferable to employ kneading means for improving dispersibility. As a kneading method, a known kneading method can be employed, but it is preferable to use a centrifugal kneading method and a mortar kneading method in combination. The kneading time is not particularly limited, and can be arbitrarily selected, and dispersibility is improved as the kneading time increases. A solvent for adjusting the viscosity may be added.

### (c) Uses of metal particle-containing composition

The metal particle-containing composition of the present invention can be used for joining circuit forming materials, printed circuits, internal circuits of semiconductors and printed circuit boards to electronic components like electrically conductive pastes for electronic materials, etc.

### (6) Joined body formed from metal particle-containing composition

On a joined body obtained by disposing (or patterning) the above-described metal particle-containing composition on a joining surface of a body to be joined, and performing heating, joining, and then cooling to normal temperature, a joining layer having a void content of about 1 to 20% by volume can be formed depending on joining conditions such as a heating temperature and time. A joined body obtained using the above-described metal particle-containing composition is able to have improved mechanical strengths such as tensile strength and die shear strength and improved heat resistance.

### Examples

The present invention will be described in detail by way of examples, but the present invention is not limited to these examples. Hereinafter, evaluation methods in the present examples and comparative examples will be described.

### (1) Method for measurement of primary particle diameter of metal fine particles (P1)

The "range of primary particle diameter" in Examples 1 to 12 and Comparative Examples 1 to 8 show a range of the values of the primary particle diameters of 100 observable fine particles, selected arbitrary and measured by observation using a scanning electron microscope (SEM), and the "average primary particle diameter of fine particles" is a number average particle diameter. Fine particles dispersed in ethanol were caused to pass through a filter to remove solvent, and simultaneously the sample was dried to prepare obvervation sample , followed by observing the sample with a scanning electron microscope (SEM).

### (2) Method for identification of metallic composition of metal fine particles (P1)

The metallic composition was analyzed for fine particles using an energy dispersive X-ray spectroscopic apparatus attached to a scanning electron microscope (SEM-EDX). In addition, basic crystal structure analysis of fine particles was performed as necessary by X-ray diffraction measurement using an X-ray diffraction measurement apparatus (Model: Geigerflex RAD-A manufactured by Rigaku Corporation), and CuKα as an X-ray source.

### Method for identification of organic compound on surfaces of metal fine particles (P1)

An organic compound on the surfaces of metal fine particles (P1) was identified by performing analysis using a microscopic Raman spectroscopic apparatus (Model: Nanofinder@30 manufactured by Tokyo Instruments, Inc.) and a Fourier transform infrared spectrophotometer (Model: FT/IR-4100 manufactured by JASCO Corporation). In the microscopic Raman spectroscopic apparatus, analysis was performed with a sample applied to nanosized irregular structures (Ag or Cu) capable of increasing the Raman scattering intensity by a localized surface plasmon as necessary. In addition, for the content of an organic compound as a covering material, the ratio of the organic compound in the metal fine particle (P1) ([organic compound/metal fine particle (P1)] × 100 (% by mass) was determined using a carbon/sulfur analyzer (Model: EMIA-920V2 manufactured by HORIBA, Ltd.). It is to be noted that when the measured value fell below the detection limit in a prepared calibration curve or an analyzer, calculation was performed on the premise that a substance to be measured was undetected in principle.

### [Example 1]

A metal particle-containing composition was prepared so that the composition contained copper fine particles generated through an electrolytic reduction reaction, as metal fine particles (P1), tin powder (Sn 100%) as low-melting-point metal powder (P2), and trioctyl phosphite as an activating agent (A) as shown in Table 1.

### (1) Preparation of copper fine particles

10 L of a reduction reaction aqueous solution was prepared using 200 g of monohydrate of copper acetate (II) ((CH₃COO)₂Cu·1H₂O) as a supply source of copper as a metal element and 13.6 g of trihydrate of sodium acetate (CH₃COONa·3H₂O) as alkali metal ions. The pH of the reduction reaction aqueous solution was about 5.5.

Thereafter, in this solution, a current was caused to pass between a SUS304 rod cathode (cathode electrode) and a platinum plate anode (anode electrode) at a bath temperature of 25°C and a current density of 15 A/dm² for 15 minutes to deposit copper fine particles in the vicinity of a cathode outer surface. The reaction aqueous solution after completion of the reduction reaction was taken on an aluminum mesh provided with a carbon support film, ethanol washing and water washing were performed, and the solvent was removed by drying to obtain 5 g of copper fine particles.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 20 to 400 nm, and the average primary particle diameter was 55 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that a peak attributed to an organic compound was not detected.

### (3) Preparation of metal particle-containing composition

2.7 g of the copper fine particles, which were obtained as described in (1) above and had an average primary particle diameter of 55 nm, 10.8 g of tin powder having an average primary particle diameter of 5 µm, and 1.5 g of trioctyl phosphite were mixed under a nitrogen atmosphere, and the resulting mixture was subjected to a kneading treatment with a mortar and a pestle to prepare a metal particle-containing composition.

### [Example 2]

A metal particle-containing composition was prepared so that the composition contained copper fine particles generated through an electrolytic reduction reaction, as metal fine particles (P1), tin powder (Sn 100%) as low-melting-point metal powder (P2), copper powder (Cu 100%) as metal powder (P3), and triphenyl phosphite as an activating agent (A) as shown in Table 1.

### (1) Preparation of copper fine particles

10 L of a reduction reaction aqueous solution was prepared using 200 g of monohydrate of copper acetate (II) ((CH₃COO)₂Cu·1H₂O) as a supply source of copper as a metal element and 13.6 g of trihydrate of sodium acetate (CH₃COONa·3H₂O) as alkali metal ions. The pH of the reduction reaction aqueous solution was about 5.5.

Thereafter, in this solution, a current was caused to pass between a SUS304 rod cathode (cathode electrode) and a platinum plate anode (anode electrode) at a bath temperature of 40°C and a current density of 10 A/dm² for 15 minutes to precipitate copper fine particles in the vicinity of a cathode outer surface. The reaction aqueous solution after completion of the reduction reaction was taken on an aluminum mesh provided with a carbon support film, ethanol washing and water washing were performed, and the solvent was removed by drying to obtain 5 g of copper fine particles.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 80 to 500 nm, and the average primary particle diameter was 200 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The obtained copper fine particles were applied onto a nanostructure electrode, and analyzed by a microscopic Raman spectroscopic apparatus and a Fourier transform infrared spectrophotometer, and the result showed that a distinct peak attributed to an organic compound was not detected.

### (3) Preparation of metal particle-containing composition

2.7 g of the obtained copper fine particles having an average primary particle diameter of 200 nm, 0.3 g of copper powder having an average primary particle diameter of 1µm, 10.8 g of tin powder having an average primary particle diameter of 5 µm, and 1.5 g of triphenyl phosphite were mixed under a nitrogen atmosphere, and the resulting mixture was subjected to a kneading treatment with a mortar and a pestle to prepare a metal particle-containing composition.

### [Example 3]

A metal particle-containing composition was prepared so that the composition contained copper fine particles generated through an electrolytic reduction reaction, as metal fine particles (P1), tin powder (Sn 100%) as low-melting-point metal powder (P2), copper powder (Cu 100%) as metal powder (P3), and tris(nonylphenyl) phosphite as an activating agent (A) as shown in Table 1.

### (1) Preparation of copper fine particles

10 L of a reduction reaction aqueous solution was prepared using 200 g of monohydrate of copper acetate (II) ((CH₃COO)₂Cu·1H₂O) as a supply source of copper as a metal element, 300 g of N-vinyl-2-pyrrolidone as an organic additive and 16 g of trihydrate of sodium acetate (CH₃COONa.3H₂O) as alkali metal ions. The pH of the reduction reaction aqueous solution was about 5.8.

Thereafter, in this solution, a current was caused to pass between a SUS304 rod cathode (cathode electrode) and a platinum plate anode (anode electrode) at a bath temperature of 25°C and a current density of 15 A/dm² for 10 minutes to deposit copper fine particles in the vicinity of a cathode outer surface. The reaction aqueous solution after completion of the reduction reaction was taken on an aluminum mesh provided with a carbon support film, ethanol washing and water washing were performed, and the solvent was removed by drying to obtain 4.5 g of copper fine particles.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 1 to 80 nm, and the average primary particle diameter was 15 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from N-vinyl-2-pyrrolidone was detected. In analysis of copper fine particles using a carbon/sulfur analyzer, the ratio of an organic dispersant in metal fine particles (P1) covered with N-vinyl-2-pyrrolidone was 2% by mass.

### (3) Preparation of metal particle-containing composition

0.44 g of the copper fine particles, which were obtained as described in (1) above and had an average primary particle diameter of 15 nm, 3.33 g of copper powder having an average primary particle diameter of 5 µm, 8.8 g of tin powder having an average primary particle diameter of 5 µm, and 1.5 g of tris(nonylphenyl) phosphite were mixed under a nitrogen atmosphere, and the resulting mixture was subjected to a kneading treatment with a mortar and a pestle to prepare a metal particle-containing composition.

### [Example 4]

A metal particle-containing composition was prepared so that the composition contained copper fine particles generated through an electroless reduction reaction, as metal fine particles (P1), tin powder (100% Sn) as low-melting-point metal powder (P2), and trioctyl phosphite as an activating agent (A) as shown in Table 1.

### (1) Preparation of copper fine particles

14.6 g of copper hydroxide as a supply source of copper as a metal element and 5 g of polyvinylpyrrolidone as an organic dispersant were added to 960 g of distilled water, the resulting mixture was stirred, and the resulting aqueous solution was transferred into a nitrogen gas atmosphere. Thereafter, a sodium borohydride solution as reducing agent was added to the aqueous solution to prepare 1 L (liter) of a reduction reaction aqueous solution. The prepared reduction reaction aqueous solution had an oxidation-reduction potential of -400 mV or less based on a standard hydrogen electrode, and a pH of about 13. The reduction reaction aqueous solution was continuously subjected to an electroless reduction reaction with stirring at a bath temperature of 20°C for 60 minutes with a reducing agent added dropwise, or the like, as appropriate so that the oxidation-reduction potential was -400 mV or less, and as a result, copper fine particles were deposited in the solution. The obtained copper fine particle dispersion aqueous solution was put in a centrifugal separator, and copper fine particle components were precipitated and recovered. An ethanol washing operation of adding ethanol to the recovered copper fine particles, and washing the resulting mixture by stirring, and recovering the copper fine particles in a centrifugal separator was carried out twice, the copper fine particles were washed with water, and the solvent was removed by drying to obtain 5 g of copper fine particles.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 20 to 200 nm, and the average primary particle diameter was 35 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from polyvinylpyrrolidone was detected. In analysis of copper fine particles using a carbon/sulfur analyzer, the ratio of an organic dispersant in metal fine particles (P1) covered with polyvinylpyrrolidone was 0.1% by mass.

### (3) Preparation of metal particle-containing composition

2.2 g of the copper fine particles, which were obtained as described in (1) above and had an average primary particle diameter of 35 nm, 8.8 g of tin powder having an average primary particle diameter of 5 µm, and 1.5 g of trioctyl phosphite were mixed under a nitrogen atmosphere, and the resulting mixture was subjected to a kneading treatment with a mortar and a pestle to prepare a metal particle-containing composition.

### [Example 5]

A metal particle-containing composition was prepared so that contained copper fine particles generated through an electroless reduction reaction, as metal fine particles (P1), tin-silver-copper powder (96.5% Sn-3% Ag-0.5% Cu) as low-melting-point metal powder (P2), and phenyl sulfide as an activating agent (A) as shown in Table 1.

### (1) Preparation of copper fine particles

Copper fine particles were obtained as in Example 4.

### (2) Evaluation of generated copper fine particles

Evaluation result similar to those in Example 4 was obtained.

### (3) Preparation of metal particle-containing composition

2.2 g of the copper fine particles, which were obtained as described in (1) above and had an average primary particle diameter of 35 nm, 8.8 g of tin-silver-copper powder having an average primary particle diameter of 10 µm, and 1.5 g of phenyl sulfide were mixed under a nitrogen atmosphere, and the resulting mixture was subjected to a kneading treatment with a mortar and a pestle to prepare a metal particle-containing composition.

### [Example 6]

A metal particle-containing composition was prepared so that the composition contained copper fine particles generated through an electroless reduction reaction, as metal fine particles (P1), tin-zinc-aluminum powder (91.99% Sn-8% Zn-0.01% A1) as low-melting-point metal powder (P2), and phenyl sulfide and trilauryl trithiophosphite as an activating agent (A) as shown in Table 1.

### (1) Preparation of copper fine particles

Copper fine particles were obtained as in Example 4.

### (2) Evaluation of generated copper fine particles

### (a) Primary particle diameter of copper fine particles and identification of metal species

Evaluation result similar to those in Example 4 was obtained.

### (3) Preparation of metal particle-containing composition

2.2 g of the copper fine particles, which were obtained as described in (1) above and had an average primary particle diameter of 35 nm, 8.8 g of tin-zinc-aluminum powder having an average primary particle diameter of 10 µm, 1.4 g of phenyl sulfide and 0.1 g of trilauryl trithiophosphite were mixed under a nitrogen atmosphere, and the resulting mixture was subjected to a kneading treatment with a mortar and a pestle to prepare a metal particle-containing composition.

### [Example 7]

A metal particle-containing composition was prepared so that the composition contained copper fine particles generated through an electroless reduction reaction, as metal fine particles (P1), tin-bismuth powder (42% Sn-58% Bi) as low-melting-point metal powder (P2), and tributyl phosphite as an activating agent (A) as shown in Table 1.

### (1) Preparation of copper fine particles

Copper fine particles were obtained using 70 g of polyvinylpyrrolidone as an organic dispersant, controlling the oxidation-reduction potential to -800 mV or less, and setting the other conditions as in Example 4.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 1 to 50 nm, and the average primary particle diameter was 15 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from polyvinylpyrrolidone was detected. In analysis of copper fine particles using a carbon/sulfur analyzer, the ratio of an organic dispersant in metal fine particles (P1) covered with polyvinylpyrrolidone was 10% by mass.

### (3) Preparation of metal particle-containing composition

2.2 g of the copper fine particles, which were obtained as described in (1) above and had an average primary particle diameter of 15 nm, 8.8 g of tin-bismuth powder having an average primary particle diameter of 0.55 µm and 1.5 g of tributyl phosphite were mixed under a nitrogen atmosphere, and the resulting mixture was subjected to a kneading treatment with a mortar and a pestle to prepare a metal particle-containing composition.

### [Example 8]

A metal particle-containing composition was prepared so that the composition contained copper fine particles generated through an electroless reduction reaction, as metal fine particles (P1), zinc powder (100% Zn) as low-melting-point metal powder (P2), and tris(nonylphenyl) phosphite and 4-(diphenylphosphino)styrene as an activating agent (A) as shown in Table 1.

### (1) Preparation of copper fine particles

Copper fine particles were obtained using 5 g of polyvinylpyrrolidone and 100 g of polyacrylamide as an organic dispersant, controlling the oxidation-reduction potential to -300 mV or less, and setting the other conditions as in Example 4.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 40 to 500 nm, and the average primary particle diameter was 70 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that peaks attributed to a pyrrolidone group (C₄H₆NO) derived from polyvinylpyrrolidone and polyacrylamide were detected. In analysis of copper fine particles using a carbon/sulfur analyzer, the ratio of an organic dispersant in metal fine particles (P1) covered with polyvinylpyrrolidone and polyacrylamide was 30% by mass.

### (3) Preparation of metal particle-containing composition

1.8 g of the copper fine particles, which were obtained as described in (1) above and had an average primary particle diameter of 70 nm, 10.2 g of zinc powder having an average primary particle diameter of 5 µm, 1.6 g of tris(nonylphenyl) phosphite and 0.1 g of 4-(diphenylphosphino)styrene were mixed under a nitrogen atmosphere, and the resulting mixture was subjected to a kneading treatment with a mortar and a pestle to prepare a metal particle-containing composition.

### [Example 9]

A metal particle-containing composition was prepared so that the composition contained copper fine particles generated through an electrolytic reduction reaction, as metal fine particles (P1), tin-zinc-bismuth powder (89% Sn-8% Zn-3% Bi) as low-melting-point metal powder (P2), and dihexyl sulfide as an activating agent (A) as shown in Table 1.

### (1) Preparation of copper fine particles

Copper fine particles were obtained in the condition of using 200 g of N-vinyl-2-pyrrolidone and 200 g of N-methyl-2-pyrrolidone as an organic additive, and setting the other conditions as in Example 4.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 1 to 100 nm, and the average primary particle diameter was 25 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that peaks attributed to pyrrolidone groups (C₄H₆NO) derived from N-vinyl-2-pyrrolidone and N-methyl-2-pyrrolidone were detected. In analysis of copper fine particles using a carbon/sulfur analyzer, the ratio of an organic dispersant in metal fine particles (P1) covered with N-vinyl-2-pyrrolidone and N-methyl-2-pyrrolidone was 3% by mass.

### (3) Preparation of metal particle-containing composition

2.2 g of the copper fine particles, which were obtained as described in (1) above and had an average primary particle diameter of 25 nm, 8.8 g of tin-zinc-bismuth powder having an average primary particle diameter of 5 µm and 1.5 g of dihexyl sulfide were mixed under a nitrogen atmosphere, and the resulting mixture was subjected to a kneading treatment with a mortar and a pestle to prepare a metal particle-containing composition.

### [Example 10]

A metal particle-containing composition was prepared so that the composition contained copper-nickel alloy fine particles generated through an electrolytic reduction reaction, as metal fine particles (P1), tin-zinc-bismuth powder (89% Sn-8% Zn-3% Bi) as low-melting-point metal powder (P2), and tris(nonylphenyl) phosphite as an activating agent (A) as shown in Table 1.

### (1) Preparation of copper-nickel alloy fine particles

Copper-nickel alloy fine particles were obtained by adding 20 g of monohydride of copper acetate (II) as a supply source of copper and 2.6 g of tetrahydrate of nickel acetate (II) as a supply source of nickel as metal elements were added, and setting the other conditions as in Example 4.

### (2) Evaluation of generated copper-nickel alloy fine particles

### (a) Primary particle diameter of copper-nickel alloy fine particles and identification of metal species

The result of observation with the scanning electron microscope (SEM-EDX) showed that the primary particle diameters of the generated copper-nickel alloy fine particles were in a range of 30 to 150 nm, and the average primary particle diameter was 50 nm. In addition, the copper-nickel alloy fine particles were analyzed by an energy dispersive X-ray analysis apparatus (EDX), and the result showed that the copper-nickel alloy fine particles had a metal composition of 90 % by mass copper and 10 % by mass nickel (hereinafter, sometimes referred to as copper-10% nickel alloy).

### (b) Identification of covering material on copper-nickel alloy fine particles

The copper-nickel alloy fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from N-vinyl-2-pyrrolidone was detected. In analysis of copper-nickel alloy fine particles using a carbon/sulfur analyzer, the ratio of an organic dispersant in metal fine particles (P1) covered with N-vinyl-2-pyrrolidone was 1% by mass.

### (3) Preparation of metal particle-containing composition

2.2 g of the copper-nickel alloy fine particles, which were obtained as described in (1) above and had an average primary particle diameter of 50 nm, 8.8 g of tin-zinc-bismuth powder having an average primary particle diameter of 5 µm and 1.5 g of tris(nonylphenyl) phosphite were mixed under a nitrogen atmosphere, and the resulting mixture was subjected to a kneading treatment with a mortar and a pestle to prepare a metal particle-containing composition.

### [Example 11]

A metal particle-containing composition was prepared so that the composition contained gold fine particles generated through a polyol reduction reaction, as metal fine particles (P1), tin powder (100% Sn) as low-melting-point metal powder (P2), and tris(nonylphenyl) phosphite as an activating agent (A) as shown in Table 1.

### (1) Preparation of gold fine particle

12 g of gold chloride tetrahydrate as a supply source of gold as a metal element, and 50 g of polyvinylpyrrolidone and 1 g of polyvinyl alcohol as an organic dispersant were added to 500 g of ethylene glycol to prepare a reduction reaction solution. The prepared reduction reaction solution was continuously reacted with stirring at a bath temperature of 130°C for 60 minutes, and as a result, gold fine particles were deposited in the solution. The obtained gold fine particle dispersion liquid was diluted with ethanol, and then put in a centrifugal separator, and gold fine particle components were precipitated and recovered. An ethanol washing operation of adding ethanol to the recovered gold fine particles, and washing the resulting mixture by stirring, and recovering the gold fine particles in a centrifugal separator was carried out twice, gold fine particles were washed with water, and the solvent was removed by drying to obtain 2.9 g of gold fine particles.

### (2) Evaluation of generated gold fine particles

### (a) Primary particle diameter of gold fine particles and identification of metal species

The result of observation with the scanning electron microscope (SEM-EDX) showed that the primary particle diameters of the generated gold fine particles were in a range of 5 to 100 nm, and the average primary particle diameter was 25 nm. In addition, the gold fine particles were analyzed by an energy dispersive X-ray analysis apparatus (EDX), and the result showed that the gold fine particles had a metal composition of 100 % by mass gold.

### (b) Identification of covering material on gold fine particles

The gold fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from polyvinylpyrrolidone was detected. In analysis of gold fine particles using a carbon/sulfur analyzer, the ratio of an organic dispersant in metal fine particles (P1) covered with polyvinylpyrrolidone was 1% by mass.

### (3) Preparation of metal particle-containing composition

8 g of the gold fine particles, which were obtained as described in (1) above and had an average primary particle diameter of 25 nm, 2 g of tin powder having an average primary particle diameter of 50 µm and 2.5 g of tris(nonylphenyl) phosphite were mixed under a nitrogen atmosphere, and the resulting mixture was subjected to a kneading treatment with a mortar and a pestle to prepare a metal particle-containing composition.

### [Example 12]

A metal particle-containing composition was prepared so that the composition contained silver fine particles generated through a polyol reduction reaction, as metal fine particles (P1), tin powder (100% Sn) as low-melting-point metal powder (P2), silver powder (100% Ag) as metal powder (P3), and tris(nonylphenyl) phosphite as an activating agent (A) as shown in Table 1.

### (1) Preparation of silver fine particles

7 g of silver nitrate as a supply source of silver as a metal element, and 50 g of polyvinylpyrrolidone and 1 g of polyvinyl alcohol as an organic dispersant were added to 500 g of ethylene glycol to prepare a reduction reaction solution. The prepared reduction reaction solution was continuously reacted with stirring at a bath temperature of 130°C for 60 minutes, and as a result, silver fine particles were deposited in the solution. The obtained silver fine particle dispersion liquid was diluted with ethanol, and then put in a centrifugal separator, and silver fine particle components were precipitated and recovered. An ethanol washing operation of adding ethanol to the recovered silver fine particles, and washing the resulting mixture by stirring, and recovering the silver fine particles in a centrifugal separator was carried out twice, silver fine particles were washed with water, and the solvent was removed by drying to obtain 2.8 g of silver fine particles.

### (2) Evaluation of generated silver fine particles

### (a) Primary particle diameter of silver fine particles and identification of metal species

The result of observation with the scanning electron microscope (SEM-EDX) showed that the primary particle diameters of the generated silver fine particles were in a range of 5 to 120 nm, and the average primary particle diameter was 35 nm. In addition, the silver fine particles were analyzed by an energy dispersive X-ray analysis apparatus (EDX), and the result showed that the silver fine particles had a metal composition of 100 % by mass silver.

### (b) Identification of covering material on silver fine particles

### (b) Identification of covering material on silver fine particles

The silver fine particles obtained as described in (1) above were applied onto a nanostructure electrode, and analyzed by a microscopic Raman spectroscopic apparatus and a Fourier transform infrared spectrophotometer, and the result showed that a peak attributed to a pyrrolidone group (C₄H₆NO) derived from polyvinylpyrrolidone was detected. In analysis of silver fine particles using a carbon/sulfur analyzer, the ratio of an organic dispersant in metal fine particles (P1) covered with polyvinylpyrrolidone was 1.2% by mass.

### (3) Preparation of metal particle-containing composition

6.6 g of the silver fine particles, which were obtained as described in (1) above and had an average primary particle diameter of 35 nm, 0.2 g of silver powder having an average primary particle diameter of 50 µm, 4.4 g of tin powder having an average primary particle diameter of 50 µm and 1.9 g of tris(nonylphenyl) phosphite were mixed under a nitrogen atmosphere, and the resulting mixture was subjected to a kneading treatment with a mortar and a pestle to prepare a metal particle-containing composition.

### [Comparative Example 1]

A metal particle-containing composition was prepared as in Example 4, except that as low-melting-point metal powder, antimony powder (100% Sb) was used in place of tin powder (100% Sn) as shown in Table 1.

### (1) Preparation of copper fine particles

5 g of copper fine particles was obtained as in Example 4.

### (2) Evaluation of generated copper fine particles

Evaluation results similar to those in Example 4 were obtained.

### (3) Preparation of metal particle-containing composition

2.2 g of the copper fine particles, which were obtained as described in (1) above and had an average primary particle diameter of 35 nm, 8.8 g of antimony powder having an average primary particle diameter of 5 µm and 1.5 g of trioctyl phosphite were mixed under a nitrogen atmosphere, and the resulting mixture was subjected to a kneading treatment with a mortar and a pestle to prepare a metal particle-containing composition.

### [Comparative Example 2]

A metal particle-containing composition was prepared as in Example 4, except that as an activating agent, n-octanoic acid was used in place of trioctyl phosphite as shown in Table 1.

### (1) Preparation of copper fine particles

5 g of copper fine particles was obtained as in Example 4.

### (2) Evaluation of generated copper fine particles

Evaluation results similar to those in Example 4 were obtained.

### (3) Preparation of metal particle-containing composition

2.2 g of the obtained copper fine particles having an average primary particle diameter of 35 nm, 8.8 g of tin powder having an average primary particle diameter of 5 µm, and 1.5 g of n-octanoic acid were mixed under a nitrogen atmosphere, and the resulting mixture was subjected to a kneading treatment with a mortar and a pestle to prepare a metal particle-containing composition.

### [Comparative Example 3]

A metal particle-containing composition was prepared as in Example 4, except that as an activating agent, diethylene glycol was used in place of trioctyl phosphite as shown in Table 1.

### (1) Preparation of copper fine particles

5 g of copper fine particles was obtained as in Example 4.

### (2) Evaluation of generated copper fine particles

Evaluation results similar to those in Example 4 were obtained.

### (3) Preparation of metal particle-containing composition

2.2 g of the copper fine particles, which were obtained as described in (1) above and had an average primary particle diameter of 35 nm, 8.8 g of tin powder having an average primary particle diameter of 5 µm and 1.5 g of diethylene glycol were mixed under a nitrogen atmosphere, and the resulting mixture was subjected to a kneading treatment with a mortar and a pestle to prepare a metal particle-containing composition.

### [Comparative Example 4]

A metal particle-containing composition was prepared as in Example 4, except that as an activating agent, tributylphosphine oxide was used in place of trioctyl phosphite as shown in Table 1.

### (1) Preparation of copper fine particles

5 g of copper fine particles was obtained as in Example 4.

### (2) Evaluation of generated copper fine particles

Evaluation results similar to those in Example 4 were obtained.

### (3) Preparation of metal particle-containing composition

2.2 g of the copper fine particles, which were obtained as described in (1) above and had an average primary particle diameter of 35 nm, 8.8 g of tin powder having an average primary particle diameter of 5 µm, 0.5 g of tributylphosphine oxide, and 1 g of hexane as a viscosity adjusting agent were mixed under a nitrogen atmosphere, and the resulting mixture was subjected to a kneading treatment with a mortar and a pestle to prepare a metal particle-containing composition.

### [Comparative Example 5]

A metal particle-containing composition was prepared as in Example 4, except that as an activating agent, isopropyl methyl sulfone was used in place of trioctyl phosphite as shown in Table 1.

### (1) Preparation of copper fine particles

5 g of copper fine particles was obtained as in Example 4.

### (2) Evaluation of generated copper fine particles

Evaluation results similar to those in Example 4 were obtained.

### (3) Preparation of metal particle-containing composition

2.2 g of the copper fine particles, which were obtained as described in (1) above and had an average primary particle diameter of 35 nm, 8.8 g of tin powder having an average primary particle diameter of 5 µm, and 1.5 g of isopropyl methyl sulfone were mixed under a nitrogen atmosphere, and the resulting mixture was subjected to a kneading treatment with a mortar and a pestle to prepare a metal particle-containing composition.

### [Comparative Example 6]

A metal particle-containing composition was prepared as in Example 2, except that the primary particle diameter of copper fine particles was more than 500 nm as shown in Table 1.

### (1) Preparation of copper fine particles

5 g of copper fine particles was prepared as in Example 2, except that 1 g of trihydrate of sodium acetate (CH₃COONa·3H₂O) was used, and the bath temperature was controlled to 60°C.

### (2) Evaluation of generated copper fine particles

### (a) Primary particle diameter of copper fine particles and identification of metal species

The result of observation with the scanning electron microscope (SEM-EDX) showed that the primary particle diameters of the generated copper fine particles were in a range of 550 to 2000 nm, and the average primary particle diameter was 900 nm. In addition, the copper fine particles were analyzed by an energy dispersive X-ray analysis apparatus (EDX), and the result showed that the copper fine particles had a metal composition of 100 % by mass copper.

### (b) Identification of covering material on copper fine particles

The copper fine particles obtained as described in (1) above were applied onto a nanostructure electrode, and analyzed by a microscopic Raman spectroscopic apparatus and a Fourier transform infrared spectrophotometer, and the result showed that a distinct peak attributed to an organic compound was not detected.

### (3) Preparation of metal particle-containing composition

2.7 g of the copper fine particles, which were obtained as described in (1) above and had an average primary particle diameter of 900 nm, 10.8 g of tin powder having an average primary particle diameter of 5 µm, and 1.5 g of triphenyl phosphite were mixed under a nitrogen atmosphere, and the resulting mixture was subjected to a kneading treatment with a mortar and a pestle to prepare a metal particle-containing composition.

### [Comparative Example 7]

A metal particle-containing composition was prepared as in Comparative Example 3, except that copper fine particles were not used as shown in Table 1. That is, 11 g of tin powder having an average particle diameter of 5 µm, and 1.5 g of diethylene glycol were mixed under a nitrogen atmosphere, and the resulting mixture was subjected to a kneading treatment with a mortar and a pestle to prepare a metal particle-containing composition.

### [Comparative Example 8]

A metal particle-containing composition was prepared so that the composition contained tin powder (100% Sn) and zinc powder (100% Zn) as low-melting-point metal powder and trioctyl phosphite as an activating agent (A) without using metal fine particles (P1) as shown in Table 1. That is, 8.8 g of tin powder having an average particle diameter of 5 µm, 2.2 g of zinc powder having an average particle diameter of 5 µm, and 1.5 g of trioctyl phosphite were mixed under a nitrogen atmosphere, and the resulting mixture was subjected to a kneading treatment with a mortar and a pestle to prepare a metal particle-containing composition.

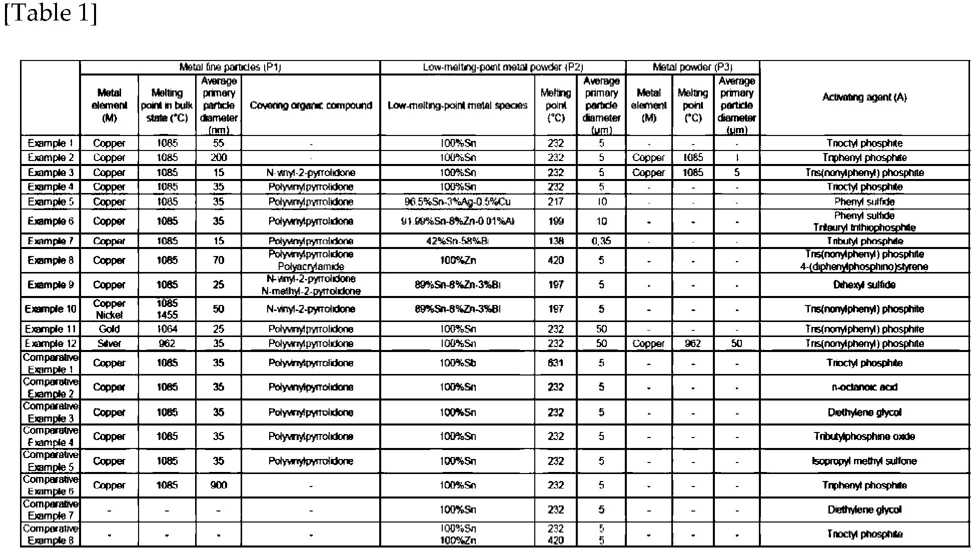

### [Evaluation test]

The following evaluation test was conducted for the metal particle-containing compositions prepared in Examples 1 to 12 and Comparative Examples 1 to 8 above.

### (1) Evaluation test on melting reaction

Reactivity of melting of metal element (M) as a main component of metal fine particles (P1) into low-melting-point metal powder (P2) was evaluated using the metal particle-containing composition prepared in each of Examples 1 to 12 and Comparative Examples 1 to 8.

First, the metal particle-containing composition obtained in each of Examples 1 to 12 and Comparative Examples 1 to 8 above was dry-applied to a copper base plate (size: 2 cm × 2 cm) in such a manner that the thickness of the metal particle-containing composition would be 20 to 30 µm after heating. Thereafter, a sample obtained by mounting a copper base plate (size: 2 cm × 2 cm) on the applied film was placed in a heat treatment furnace of atmosphere control type, heated and fired in a nitrogen gas atmosphere or air atmosphere at a temperature in a range of 250 to 430°C for 10 to 60 minutes, and then slowly cooled to room temperature in the heat treatment furnace, so that the metallic plate material and the copper base plate were joined to each other with the sintered body interposed therebetween.

A cross-section structure of the joined body sample obtained by the above-described process was observed, and the sample was rated good when the particle shape of metal fine particles (P1) or low-melting-point metal powder (P2) was not observed in the joining layer, while the sample was rated bad when metal fine particles (P1) or low-melting-point metal powder (P2) kept maintaining a particle shape. Evaluation results in Examples 1 to 12 and Comparative Examples 1 to 8 are shown in Table 2.

### (2) Evaluation test on joining of plate material

Joining of plate materials joined using the metal particle-containing composition obtained in each of Examples 1 to 12 and Comparative Examples 1 to 8 above was evaluated.

First, the metal particle-containing composition obtained in each of Examples 1 to 12 and Comparative Examples 1 to 8 above was applied to a metal base plate (size: 2 cm × 10 cm) in such a manner that the joining area would be 2 cm × 2 cm after heating, and the thickness of the joining member would be 20 to 300 µmafter heating. Thereafter, a sample obtained by mounting a metal base plate (size: 2 cm × 10 cm) on the applied film was placed in a heat treatment furnace of atmosphere control type, heated and fired in a nitrogen gas atmosphere or air atmosphere at a temperature in a range of 250 to 430°C for 10 to 60 minutes, and then slowly cooled to room temperature in the heat treatment furnace, so that the metallic plate material and the copper base plate were joined to each other with the sintered body interposed therebetween.

For the joined body sample obtained by the above-described process, the tensile strength of the joined parts was evaluated in accordance with a method compliant with JIS Z 2241 (metal material tension test method).

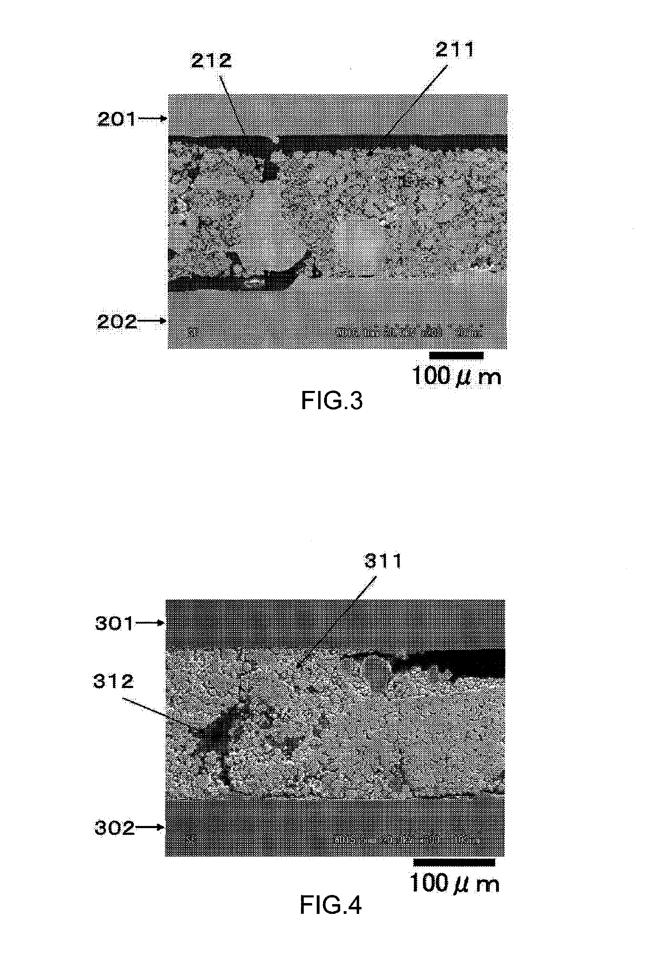

In addition, a SEM image of a cross-section of the joint was photographed. Specific examples of the SEM image of a cross-section are shown in FIGs. 2 to 4. That is, FIG. 2 is a SEM image of a cross-section of copper plates 101 and 102 joined using the sample prepared in Example 4, and shows a copper-tin alloy phase 111, a tin-rich phase 112 and a void 113. FIG. 3 is a SEM image of a cross-section of copper plates 201 and 202 joined using the sample prepared in Comparative Example 4, and shows a tin-rich phase 211 and a void 212. FIG. 4 is a SEM image of a cross-section of copper plates 301 and 302 joined using the sample prepared in Comparative Example 7, and shows a tin-rich phase 311 and a void 312. The joint of copper plates joined using each of the metal particle-containing compositions prepared in Examples 1 to 12 and Comparative Examples 1 to 8 was subjected to black to white conversion such that in the photographed image, pixels of void parts were rendered black, and parts other than the void parts were rendered white, and the void content was expressed as numerical data using image digitizing software. Evaluation results for Examples 1 to 12 and Comparative Examples 1 to 8 are shown in Table 2.

### (3) Evaluation of joining of chip

Joining of a silicon chip joined to a surface of a base plate was evaluated using the metal particle-containing composition obtained in each of Examples 1 to 12 and Comparative Examples 1 to 8 above.

First, the metal particle-containing composition obtained in each of Examples 1 to 12 and Comparative Examples 1 to 8 above was dry-applied to a copper base plate (size: 2 cm × 2 cm) in such a manner that the thickness of the joining member would be 20 to 300 µm after heating. Thereafter, a sample obtained by pressing a semiconductor silicon chip (size: 4 mm × 4 mm) onto the applied film with a pressurizing force of 4 MPa was placed in a heat treatment furnace of atmosphere control type, heated and fired in a nitrogen gas atmosphere or air atmosphere at a temperature in a range of 250 to 430°C for 10 to 60 minutes, and then slowly cooled to room temperature in the heat treatment furnace, so that the semiconductor element and the conductor base plate were joined to each other with the sintered body interposed therebetween.

The die shear strength of the silicon chip joined to the surface of the base plate by the above-described process was evaluated at 25°C using a die shear strength evaluation apparatus compliant with US MIL-STD-883. Evaluation results in Examples 1 to 12 and Comparative Examples 1 to 8 are shown in the following Table 2.

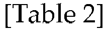

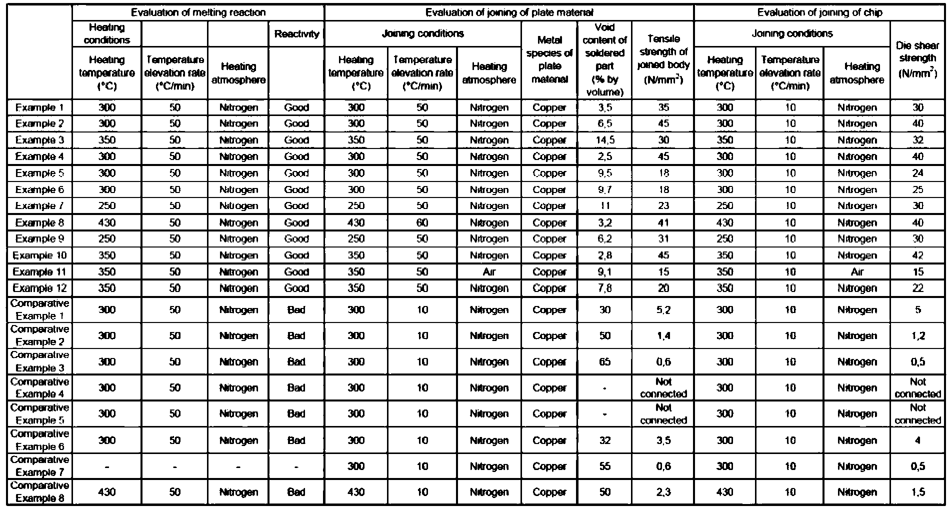

### [Discussions on evaluation results]

In evaluation of joining of a plate material, examples using the metal particle-containing composition satisfying the constitution of the present invention evidently had a more favorable joining strength as compared to comparative examples. Examples also tended to have a lower void content at a joint. Further, in evaluation of joining of a chip, examples had a higher die shear strength as compared to comparative examples.

The reason why a favorable joining strength can be attained in examples as described above is that by using an activating agent (A) containing in the molecular structure one or more phosphorus or sulfur atoms which are bonded to oxygen atoms with an increase in valence, low-melting-point metal powder (P2) can be activated by removing oxygen atoms without generating water. That is, only a change occurs such that the valence of phosphorus or sulfur increases at the time when phosphorus or sulfur contained in the activating agent (A) is directly bonded to oxygen atoms, and an unnecessary byproduct such as water is not generated from the activating agent (A). The activating agent (A) after absorbing oxygen atoms also has an effect of being decomposed into a volatile organic substance having a low molecular weight by catalytic action of metal fine particles, so that it is possible to reduce the amount of organic substance residues while suppressing formation of voids.

Thus, it has been confirmed that by using the metal particle-containing composition of the constitution of the present invention, the joining strength of materials can be considerably increased.

### List of Reference Signs

101, 102, 201, 202, 301, 302 copper plate
111 copper-tin alloy phase
112, 211, 311 tin-rich phase
113, 212, 312 void

## Claims

1. A metal particle-containing composition **characterized by** comprising:
metal fine particles (P1) including one or more metal elements (M), wherein the metal fine particles (P1) have a particle diameter in terms of a primary particle diameter of from 1 nm to 500 nm, and a melting point as a bulk of higher than 420°C;
low-melting-point metal powder (P2) which includes a metal or alloy having a melting point as a bulk of 420°C or lower, and unavoidably contains oxygen; and
an activating agent (A) containing in the molecular structure one or more phosphorus or sulfur atoms, wherein the activating agent (A) can be bonded to oxygen atoms without generating water.

2. The metal particle-containing composition according to claim 1, **characterized in that** the metal elements (M) is at least one selected from copper, silver, gold and nickel.

3. The metal particle-containing composition according to claim 1 or 2, **characterized in that** the particle diameter in terms of a primary particle of the low-melting-point metal powder (P2) is from more than 500 nm to 50 µm.

4. The metal particle-containing composition according to any one of claims 1 to 3, **characterized in that** the low-melting-point metal powder (P2) is tin metal powder, or tin alloy powder in which at least one selected from copper, silver, zinc, phosphorus, aluminum and bismuth forms a solid solution with tin.

5. The metal particle-containing composition according to any one of claims 1 to 4, **characterized in that** the activating agent (A) is an organic phosphorus compound (A1) containing at least one carbon atom in the molecular structure.

6. The metal particle-containing composition according to claim 5, **characterized in that** the organic phosphorus compound (A1) is at least one selected from phosphines and phosphites.

7. The metal particle-containing composition according to any one of claims 1 to 4, **characterized in that** the activating agent (A) is an organic sulfur compound (A2) containing at least one carbon atom in the molecular structure.

8. The metal particle-containing composition according to claim 7, **characterized in that** the organic sulfur compound (A2) is at least one selected from sulfides, disulfides, trisulfides and sulfoxides.

9. The metal particle-containing composition according to any one of claims 1 to 8, **characterized by** further comprising metal powder (P3) including one or more metal elements (M), wherein the metal powder (P3) has a particle diameter in terms of a primary particle diameter of from more than 500 nm to 50 µm, and a melting point as a bulk of higher than 420°C.
